# EUROPEAN PATENT APPLICATION

(11) **EP 4 733 836 A1**
(43) Date of publication of application: **29.04.2026**
(21) Application number: 24830203.6
(22) Date of filing: 14.05.2024
(51) Int. Cl.: G02F 1/1362

(54) **DISPLAY SUBSTRATE AND DISPLAY PANEL**

(30) Priority: 29.06.2023 CN 202310786621
(71) Applicant: Boe Technology Group Co., Ltd., Beijing 100015 (CN); Beijing BOE Technology Development Co., Ltd., Daxing District Beijing 100176 (CN)
(72) Inventor: ZHANG, Shunhang, Beijing 100176 (CN); ZHOU, Tianmin, Beijing 100176 (CN); HAN, Jiahui, Beijing 100176 (CN); LIANG, Pengxia, Beijing 100176 (CN); YANG, Ruizhi, Beijing 100176 (CN); ZHANG, Zhenyu, Beijing 100176 (CN); XUAN, Minghua, Beijing 100176 (CN); GUO, Hui, Beijing 100176 (CN); LIU, Dongni, Beijing 100176 (CN); IM, Yunsik, Beijing 100176 (CN); YU, Lianfu, Beijing 100176 (CN); ZHANG, Zhen, Beijing 100176 (CN); LI, Peirou, Beijing 100176 (CN); DONG, Xue, Beijing 100176 (CN)
(74) Representative: Cohausz & Florack
(86) International application number: PCT/CN2024/093031
(87) International publication number: WO 2025/001555

(57) **Abstract**

The present disclosure provides a display substrate and a display panel. The display substrate includes a substrate (410), a plurality of gate lines (110) extending along a first direction (X) and a plurality of data lines (210) extending along a second direction (Y), each of which is arranged on a side of the substrate (410). The plurality of gate lines (110) are arranged in a layer different from a layer where the plurality of data lines (210) are arranged. Orthogonal projections of the plurality of gate lines (110) on the substrate intersect orthogonal projections of the plurality of data lines (210) on the substrate to define a plurality of pixel units. Each pixel unit includes at least one transistor including an active layer (300). The active layer (300) includes a channel portion (310) and a pair of electrical connection portions (320) connected to both sides of the channel portion (310). An orthogonal projection of the channel portion (310) on the substrate (410) overlaps with an orthogonal projection of a corresponding data line (210) on the substrate (410). The orthogonal projection of the channel portion (310) of each active layer (300) overlaps the data line (210), such that the channel portion (310) can be shielded by both a portion of a black matrix corresponding to the gate line (110) and a portion of the black matrix corresponding to the data line (210), thereby improving an aperture ratio.

## Description

### TECHNICAL FIELD

The present disclosure relates to the field of display devices, and in particular, to a display substrate and a display panel including the display substrate.

### BACKGROUND

As a typical field of the fusion and innovation of a new generation of information technology, a virtual reality (VR) key technology is becoming increasingly mature, the market thereof is developing rapidly, and is in a rapid upward trend. In recent years, the global commercial landing scenes of VR are more and more diversified. In addition to popular application scenes such as games and entertainment, VR is gradually adopted in new fields such as medical treatment, education, production and manufacturing, and the industry permeability of VR is continuously improved.

At the present stage, a display technology is rapidly developing, and the traditional liquid crystal display (LCD) technology is mature. With the rise of VR products, the application of liquid crystal display on VR brings new technical layout and vitality to liquid crystal display. The current pixel structure of the liquid crystal display is usually designed based on 1T (i.e., one transistor) or 2T (i.e., two transistors), has a simple pixel circuit, can have an ultra-high pixels per inch (PPI), and is advantageous compared with an organic light-emitting semiconductor (which may also be referred to as "organic electroluminescent display, OLED) technology; further, the LCD technology is mature and has cost advantages over the OLED technology.

At present, the VR display technology has achieved mass production of 1,200 PPI level in the field of liquid crystal display, and is ready for 1,500 PPI technology. With the increase of market demand of VR, the iteration speed of the liquid crystal display technology applied to VR is increased, and the 2,000+ PPI technology, which includes corresponding real RGB pixel designs, optical innovation, and more precise process technologies, is urgently needed at present.

At present, an aperture ratio is still a core index of liquid crystal display, and determines a power consumption, a brightness, and a contrast of liquid crystal display. A size of a display screen in a VR product is small (e.g., is usually about 2.5 inches), but the VR product is still required to have a resolution level of at least 2K or even 4K, such that a size of a single pixel in a liquid crystal display panel of a VR device is compressed to only a few µm, an aperture ratio of the display panel is greatly reduced, and a transmittance thereof is reduced to 1% or even lower. The whole pixel has a small light output proportion and a low display efficiency, which results in that the display power consumption is increased, and the display effect is reduced.

Therefore, it is a technical problem to be solved urgently in the field to ensure the aperture ratio of the display panel.

### SUMMARY

The present disclosure is to provide a display substrate and a display panel, such that the display substrate can not only ensure the characteristics of a thin film transistor, but also avoid the influence on the aperture ratio, reduce the display power consumption of the display substrate, and improve the display effect of the display substrate.

In order to achieve the above objects, as a first aspect of the present disclosure, a display substrate is provided, which includes a substrate, a plurality of gate lines extending along a first direction, and a plurality of data lines extending along a second direction, both the plurality of gate lines and the plurality of data lines being arranged on a side of the substrate, wherein the plurality of gate lines are arranged in a layer different from a layer where the plurality of data lines are arranged, orthogonal projections of the plurality of gate lines on the substrate intersect orthogonal projections of the plurality of data lines on the substrate to define a plurality of pixel units, each of the plurality of pixel units includes at least one transistor, the transistor includes an active layer, the active layer includes a channel portion and a pair of electrical connection portions connected to both sides of the channel portion, and an orthogonal projection of the channel portion on the substrate overlaps with an orthogonal projection of a corresponding data line on the substrate.

Optionally, the display substrate further includes a plurality of transparent electrode strips extending along the first direction, wherein positions of the plurality of transparent electrode strips are in one-to-one correspondence with positions of the plurality of gate lines, and orthogonal projections of the plurality of transparent electrode strips on the substrate cover respective orthogonal projections of the plurality of gate lines on the substrate.

Optionally, each pixel unit includes a pixel electrode, one of the electrical connection portions is electrically connected to the corresponding data line, the other of the electrical connection portions is electrically connected to the pixel electrode, and the channel portion is configured to change an electrical conduction state of the channel portion in response to a change in a potential of a corresponding gate line and a corresponding transparent electrode strip to selectively electrically connect the corresponding data line with the pixel electrode.

Optionally, in a direction parallel to a plane where the substrate is located and perpendicular to the first direction, a width of each transparent electrode strip is d1, and a width of each gate line is d2, where 1≤|d1/d2|≤4.

Optionally, each transparent electrode strip is electrically connected to a corresponding gate line, and the transparent electrode strip and the corresponding gate line are located on one side of the active layer relative to the substrate or respectively on both sides of the active layer relative to the substrate.

Optionally, the display substrate further includes a gate insulation layer located on a side of the active layer distal to the substrate, wherein the corresponding transparent electrode strip and the corresponding gate line are sequentially located on a side of the gate insulation layer distal to the substrate.

Optionally, the display substrate further includes a gate insulation layer and a first insulation layer, wherein the gate insulation layer is located between the corresponding gate line and the active layer, the first insulation layer is located on a side of the gate insulation layer distal to the substrate, the corresponding transparent electrode strip is located on a side of the first insulation layer distal to the substrate, and the corresponding gate line and the corresponding transparent electrode strip are electrically connected together through a connection via penetrating through the first insulation layer and the gate insulation layer.

Optionally, a position of an orthogonal projection of the connection via on the substrate is located between orthogonal projections of two adjacent channel portions on the substrate.

Optionally, a width of the orthogonal projection of the connection via on the substrate ranges from 1.5 µm to 2.5 µm.

Optionally, a distance between the connection via and a channel portion adjacent to the connection via is greater than or equal to 1.2 µm.

Optionally, in active layers on both sides of the connection via, a length of a portion of each channel portion, which corresponds to an end of the channel portion distal to the connection via, extending in the second direction, is gradually reduced along a direction away from the connection via.

Optionally, the one of the electrical connection portions is electrically connected to the corresponding data line through a second via, the other of the electrical connection portions is electrically connected to the pixel electrode through a first via, and an orthogonal projection of the first via on the substrate falls within an orthogonal projection of a corresponding pixel unit on the substrate.

Optionally, a width of a gap between the first via and a corresponding transparent electrode strip ranges from 0.4 µm to 0.75 µm.

Optionally, a width of a gap between the second via and a corresponding transparent electrode strip ranges from 0.4 µm to 0.75 µm.

Optionally, an extension direction of the channel portion of each active layer forms a first preset angle with the second direction, and the first preset angle ranges from 30° to 90°.

Optionally, a central axis of the channel portion of each active layer and a central axis of each electrical connection portion of the active layer coincide with each other.

Optionally, a central axis of the channel portion of each active layer and a central axis of each electrical connection portion of the active layer do not coincide with each other, and form an angle ranging from 30° to 90° therebetween.

Optionally, an extension direction of the channel portion forms a second preset angle with the first direction, any two adjacent active layers connected to a same data line are respectively located on two opposite sides of the data line, and the pixel units connected to each data line are distributed on both sides of the data line alternately.

Optionally, a ratio of a size of each pixel unit in the first direction to a size of the pixel unit in the second direction ranges from 3/4 to 4/3.

Optionally, a material of the channel portion includes any one of metal oxide, polysilicon, or low temperature polysilicon.

As a second aspect of the present disclosure, there is provided a display panel including the display substrate according to any one of the foregoing embodiments of the present disclosure.

In the display substrate and the display panel provided by the present disclosure, the display substrate includes the gate lines and the data lines intersecting the gate lines, and the data lines are connected to the corresponding pixel electrodes through the active layers of the pixel units; each channel portion is arranged at the position where a central portion of a corresponding active layer intersects a corresponding gate line, and the channel portion can change its electrical properties with a change in a signal on the gate line, so as to selectively electrically connect the pixel electrode with the data line, and to control the light emission of the pixel units. In addition, the orthogonal projection of each channel portion on the substrate overlaps with the orthogonal projection of a corresponding data line on the substrate, such that the channel portion can be shielded by both a portion of the black matrix corresponding to the gate line and a portion of the black matrix corresponding to the data line, thereby improving the aperture ratio of each pixel unit, reducing the display power consumption of the display substrate, and improving the display effect of the display substrate.

### BRIEF DESCRIPTION OF THE DRAWINGS

The accompanying drawings, which are included to provide a further understanding of the present disclosure and constitute a part of this specification, illustrate the present disclosure together with the following exemplary embodiments, but are not intended to limit the present disclosure, in which:
FIG. 1 is a schematic diagram illustrating a structure of a cross-section of a display substrate according to an embodiment of the present disclosure;
FIG. 2 is a schematic top plan view of a display substrate according to an embodiment of the present disclosure;
FIG. 3 is a schematic top plan view of a display substrate according to an embodiment of the present disclosure;
FIG. 4 is a schematic diagram illustrating a positional relationship between data lines and pixel units of a display substrate according to an embodiment of the present disclosure;
FIG. 5 is a schematic top plan view of a display substrate according to an embodiment of the present disclosure;
FIG. 6 is a schematic diagram illustrating a positional relationship between data lines and pixel units of a display substrate according to another embodiment of the present disclosure;
FIG. 7 is a schematic top plan view of a display substrate according to another embodiment of the present disclosure;
FIG. 8 is a schematic diagram illustrating an arrangement of pixel units of a display substrate according to an embodiment of the present disclosure;
FIG. 9 is a schematic top plan view of a display substrate according to an embodiment of the present disclosure;
FIG. 10 is a schematic diagram illustrating that a structure of a pixel of a display substrate changes with a misalignment distance according to an embodiment of the present disclosure;
FIG. 11 is a schematic diagram illustrating a structure of a cross-section of a display substrate according to an embodiment of the present disclosure;
FIG. 12 is a schematic top plan view of a display substrate according to an embodiment of the present disclosure;
FIG. 13 is a schematic diagram illustrating a cross-section taken along a line B-B of the structure shown in FIG. 12;
FIG. 14 is a schematic top plan view of a display substrate according to an embodiment of the present disclosure;
FIGS. 15 to 18 are schematic diagrams illustrating changes between pixel unit arrangements corresponding to different misalignment distances in a display substrate according to an embodiment of the present disclosure;
FIG. 19 is a schematic diagram illustrating comparison of values of dimensions (or sizes) marked in FIGS. 15 to 18;
FIG. 20 is a schematic diagram illustrating feature sizes (which may also be referred to as "characteristic dimensions") of a pixel unit of a display substrate according to an embodiment of the present disclosure;
FIG. 21 is a schematic diagram illustrating feature sizes of a pixel unit of a display substrate according to another embodiment of the present disclosure; and
FIG. 22 is a schematic diagram illustrating feature sizes of a pixel unit of a display substrate according to another embodiment of the present disclosure;

### description of reference symbols:

110: gate line
210: data line
220: source electrode
120: transparent electrode strip
130: connection via
300: active layer
310: channel portion
320: electrical connection portion
410: substrate
420: gate insulation layer
430: first insulation layer
440: second insulation layer
450: third insulation layer
510: first interlayer dielectric layer
520: second interlayer dielectric layer
600: pixel electrode.

### DETAILED DESCRIPTION OF EMBODIMENTS

Exemplary embodiments of the present disclosure will be described in detail below with reference to the drawings. It should be understood that the exemplary embodiments described herein are merely for illustrating and explaining the present disclosure, but are not intended to limit the present disclosure. A numerical range preceded by the term "about" herein refers to a range from a numerical value - 20% of the numerical value to the numerical value + 20% of the numerical value.

In a liquid crystal display panel, a structure of a thin film transistor (TFT) is an important factor influencing an aperture ratio, and an oxide TFT adopted in the LCD panel needs to be ensured to have a channel length L (i.e., a length L of a channel), which is long enough and is at least 3.5 µm, to ensure characteristics of the TFT due to the oxide TFT's own characteristics. However, in each of pixels with a density of 2,000 PPI or more, a channel length L is determined by a width of a gate line, and when the channel length L is large, the width of the gate line is required to keep large. However, in a display panel with a pixel density of 2,000 PPI or more, a width of a black matrix (BM) corresponding to a gate line is only 2.4 µm, and after considering a process variation, the width of the gate line needs to be at least less than 0.9 µm under the requirement that an aperture ratio is not affected after the process variation occurs. As analyzed above, if a width of the channel corresponding to the width of the gate line is as small as 0.9 µm, the channel length L obviously cannot meet the requirement, and the characteristics of the thin film transistor cannot be guaranteed.

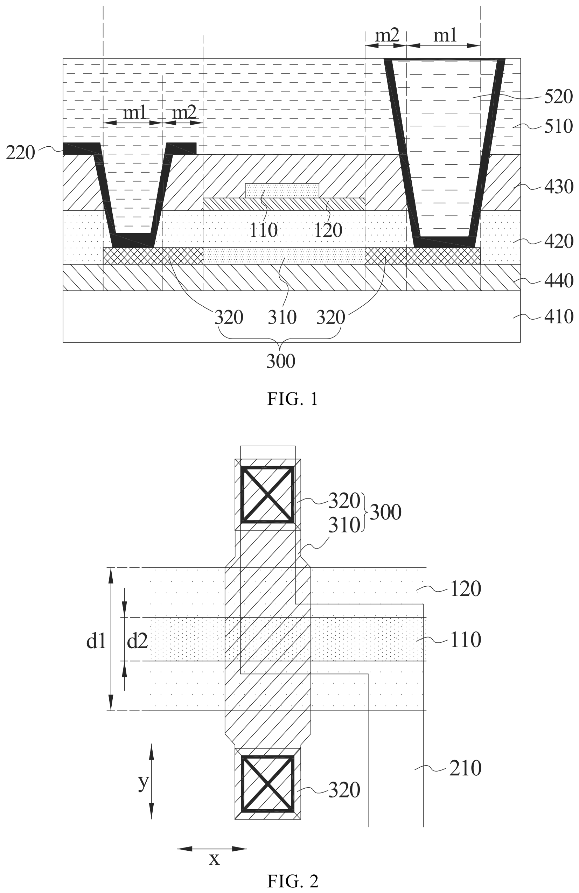

To solve the above technical problems, as a first aspect of the present disclosure, there is provided a display substrate. As shown in FIGS. 1 to 3 and 13 to 14, the display substrate includes a substrate, and a plurality of gate lines 110 extending along a first direction (i.e., direction x as shown in the figures) and a plurality of data lines 210 extending along a second direction (i.e., direction y as shown in the figures), the plurality of gate lines 110 and the plurality of data lines 210 being disposed on a side of the substrate 410. The plurality of gate lines 110 is disposed in a layer different from a layer where the plurality of data lines 210 are disposed, and orthogonal projections of the plurality of gate lines 110 on the substrate 410 intersect orthogonal projections of the plurality of data lines 210 on the substrate 410 to define a plurality of pixel units. Each of the plurality of pixel units includes at least one transistor, each of which includes an active layer 300, and the active layer 300 includes a channel portion 310 and a pair of electrical connection portions 320 respectively connected to two sides of the channel portion. An orthogonal projection of the channel portion 310 on the substrate 410 overlaps with the orthogonal projection of a corresponding data line 210 on the substrate 410.

Optionally, the display substrate further includes a liquid crystal layer, and a pixel electrode is configured to drive liquid crystal molecules of the liquid crystal layer to rotate through an electric field, so as to change a light transmittance of a pixel unit corresponding to the pixel electrode, and adjust gray levels corresponding to the pixel units, thereby implementing the function of displaying an image.

In the present disclosure, the display substrate includes the gate lines 110 and the data lines 210 intersecting the gate lines 110. The data lines 210 are connected to corresponding pixel electrodes through the active layers 300 of the pixel units, and a position where a central portion of the active layer 300 intersects a gate line 110 has the channel portion 310. Electrical properties of the channel portion 310 can be changed with a change in a signal on the gate line 110, thereby selectively electrically connecting the pixel electrode with the data line 210, and realizing the control of the light emission of each pixel unit. In addition, the orthogonal projection of the channel portion 310 on the substrate 410 overlaps with the orthogonal projection of a corresponding data line 210 on the substrate 410, thus the channel portion 310 can be shielded by both a portion of the black matrix corresponding to the gate line 110 and a portion of the black matrix corresponding to the data line 210, thereby improving the aperture ratio of each pixel unit, reducing the display power consumption of the display substrate, and improving the display effect of the display substrate.

To further improve the display effect of the display substrate, as a preferred embodiment of the present disclosure, as shown in FIGS. 1 to 3 and 13 to 14, the display substrate further includes a plurality of transparent electrode strips 120 extending along the first direction, and positions of the plurality of transparent electrode strips 120 are in one-to-one correspondence with positions of the plurality of gate lines 110. An orthogonal projection of each transparent electrode strip 120 on the substrate 410 covers the orthogonal projection of a corresponding gate line 210 on the substrate.

As an optional embodiment of the present disclosure, each pixel unit further includes a pixel electrode, one of the electrical connection portions 320 is electrically connected to a data line 210, and the other of the electrical connection portions 320 is electrically connected to the pixel electrode. The channel portion 310 can change its electrical conduction state in response to a change in potentials of the gate line 110 and the transparent electrode strip 120 to selectively electrically connect the data line 210 with the pixel electrode.

As an optional embodiment of the present disclosure, as shown in FIG. 2, in a direction parallel to a plane where the substrate 410 is located and perpendicular to the first direction, a width of the transparent electrode strip 120 is d1, and a width of the gate line 110 is d2, where 1≤|d1/d2|≤4.

As an optional embodiment of the present disclosure, the width d1 of the transparent electrode strip 120 may be 3 µm, and the width d2 of the gate line 110 may be 1 µm.

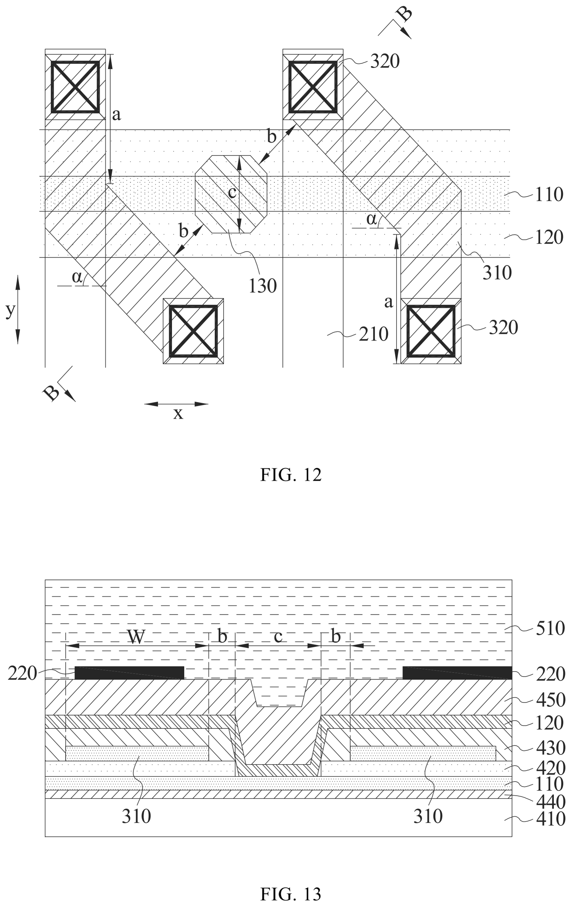

As an optional embodiment of the present disclosure, as shown in FIG. 13, a width W of the channel portion 310 is about 2.8 µm.

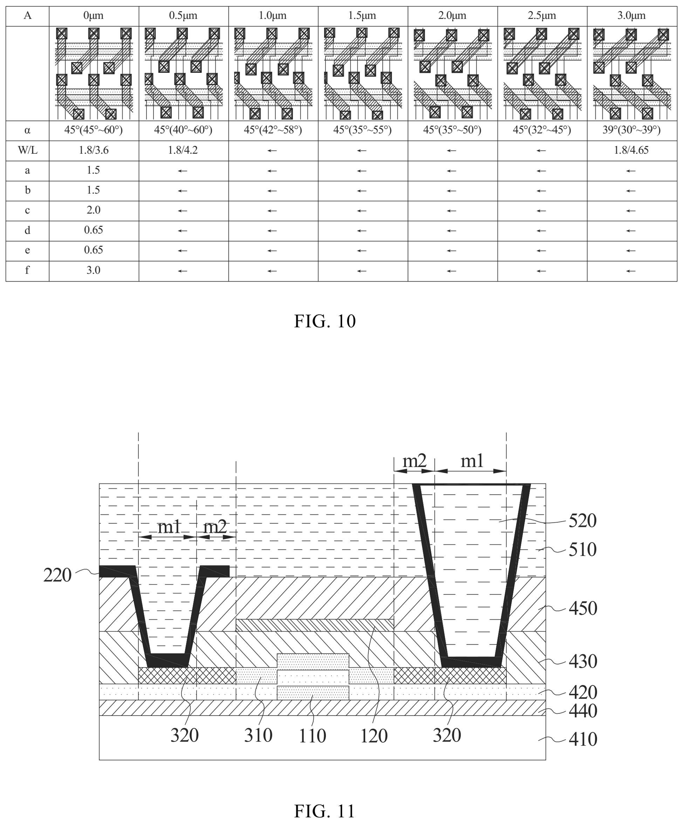

As a preferred embodiment of the present disclosure, each transparent electrode strip 120 is electrically connected to a corresponding gate line 110, and the transparent electrode strip 120 and the gate line 110 are located on one side of the active layer 300 relative to the substrate 410 (i.e., in the case of FIG. 1), or respectively on both sides of the active layer 300 relative to the substrate 410 (i.e., in the case of FIG. 11).

In an embodiment of the present disclosure, each transparent electrode strip 120 corresponds to and is electrically connected to a gate line 110, and the transparent electrode strip 120 has the same potential as the gate line 110 due to being electrically connected to the gate line 110, such that the transparent electrode strip 120 can also provide a gate signal for controlling turn-on and turn-off of the thin film transistor to the channel portion 310, thereby increasing a size of a gate electrode through the transparent electrode strip 120, and increasing the length L of the channel on the premise of not increasing a shielding area of the gate line, avoiding affecting the aperture ratio while ensuring the characteristics of the thin film transistor, reducing the display power consumption of the display substrate, and improving the display effect of the display substrate.

To further increase the aperture ratio, as a preferred embodiment of the present disclosure, a ratio of a size of each pixel unit in the first direction (i.e., a width of the pixel unit) to a size of the pixel unit in the second direction (i.e., a length of the pixel unit) is 3/4 to 4/3.

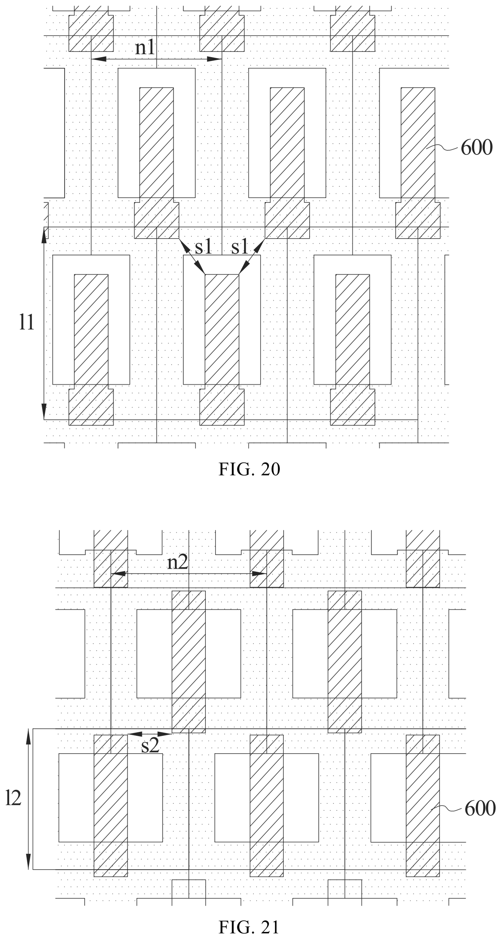

In a conventional display substrate with the specification of 2,000 PPI or more, a feature size (which may also be referred to as a "pitch") of a pixel unit is usually 4 µm × 12 µm. In contrast, the ratio of the width to the length (i.e. a width-to-length ratio) of each pixel unit according to an embodiment of the present disclosure is 3/4 to 4/3, such that the aperture ratio can be further increased while keeping the PPI of pixels unchanged. For example, as an optional embodiment of the present disclosure, as shown in FIG. 20, in the case where the width-to-length ratio of each pixel unit is 3/4, the feature size of each pixel unit is 6 µm × 8 µm, i.e., the width n1 of each pixel unit is 6 µm, and the length 11 of each pixel unit is 8 µm. As such, the PPI of the whole display substrate still remains to be about 2,000. Under the condition that each of widths of a horizontal portion and a vertical portion of the black matrix (BM) is 2.4 µm, an opening area of each pixel according to an embodiment of the present disclosure is 5.6 µm × 3.6 µm, and the aperture ratio reaches 42%. In contrast, an opening area of a conventional pixel structure is 9.6 µm × 1.6 µm, and the aperture ratio is only 31%. It can be seen that the pixel width-to-length ratio provided by an embodiment of the present disclosure increases the aperture ratio of each pixel more significantly under the same condition.

Optionally, in the case where the width-to-length ratio of each pixel unit is 3/4, a preset space s1 between pixel electrodes 600 is 2 µm.

As an optional embodiment of the present disclosure, a material of each pixel electrode 600 may be indium tin oxide (ITO).

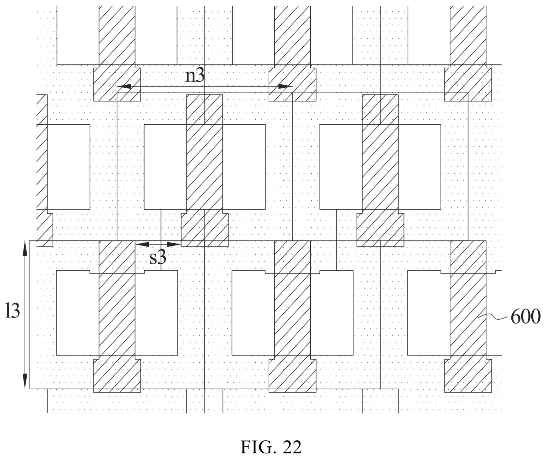

As a preferred embodiment of the present disclosure, the width-to-length ratio of each pixel unit is 4/3, and in the case that the PPI of the display substrate is about 2,000 PPI, as shown in FIG. 22, the width n3 of each pixel unit is 8 µm, and the length 13 of each pixel unit is 6 µm. In consideration of the current process limitation, the minimum width of each pixel electrode 600 made of ITO is 1.5 µm, and a minimum preset space s3 between the pixel electrodes 600 is 2 µm. As such, in the case of each pixel unit having the width of 6 µm in the foregoing embodiment, each pixel electrode 600 cannot penetrate through the whole opening area, as shown in FIG. 20. An avoidance gap of 0.85 µm is required to be set between a top end of each pixel electrode 600 and an edge of the black matrix above the pixel electrode 600, and has no pixel electrode 600 therein, such that the liquid crystal molecules therein cannot be driven by an electric field to move in a specified direction, and therefore, a certain luminous efficiency is lost. In an embodiment of the present disclosure, the width of each pixel unit in a horizontal direction is increased to 8 µm, such that each pixel electrode 600 can not only cover the entire vertical length of a corresponding pixel unit, but also further increase the width of the pixel electrode 600. As a result, an efficiency of the liquid crystal of each pixel is higher, and the display effect is further improved.

Alternatively, in the case where the width-to-length ratio of each pixel unit is 3/4, the preset space s3 between the pixel electrodes 600 is 2.5 µm.

As a preferred embodiment of the present disclosure, the width-to-length ratio of each pixel unit is 7.5/6.4, and in the case where the PPI of the display substrate is about 2,000 PPI, as shown in FIG. 21, the width n2 of each pixel unit is 7.5 µm, and the length 12 of each pixel unit is 6.4 µm. In the present embodiment, not only a horizontal space, which is 7.5 µm, of each pixel unit allows a corresponding pixel electrode 600 to penetrate through the opening area of the pixel unit, and a size of the opening area of the pixel unit is 5.1 µm × 4 µm. As such, the aperture ratio can reach 42.5%, which is higher than the aperture ratio in each of the cases where the width-to-length ratios are 3/4 and 4/3; in addition, the aperture ratio of each pixel is further increased, and the display effect is further improved, while the efficiency of the liquid crystal is ensured.

Alternatively, in the case where the width-to-length ratio of each pixel unit is 7.5/6.4, the preset space s2 between the pixel electrodes 600 is 2.25 µm.

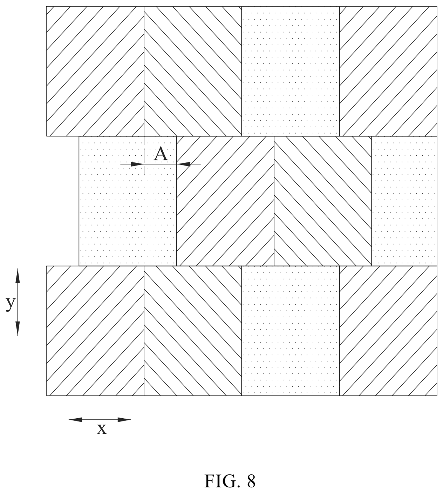

As an optional embodiment of the present disclosure, as shown in FIG. 8, the pixel units of a display substrate according to an embodiment of the present disclosure may be arranged by using a Delta distribution, i.e., any two adjacent rows of pixel units are staggered from each other along an extension direction of the gate line 110 (i.e., the first direction).

As an optional embodiment of the present disclosure, as shown in FIG. 8, any two adjacent rows of pixel units are staggered from each other along the first direction by a distance A of 0 µm to 3 µm.

In order to simplify a manufacturing process, as a preferred embodiment of the present disclosure, each transparent electrode strip 120 and a corresponding gate line 110 are stacked together to realize electrical connection therebetween. Specifically, as shown in FIGS. 1 to 3, the display substrate further includes a gate insulation layer 420. The gate insulation layer 420 is located on a side of the active layer 300 distal to the substrate 410, and the transparent electrode strip 120 and the gate line 110 are sequentially located on a side of the gate insulation layer 420 distal to the substrate 410.

As an optional embodiment of the present disclosure, as shown in FIG. 1, the display substrate further includes a first insulation layer 430, a second insulation layer 440, a first interlayer dielectric layer 510, and a second interlayer dielectric layer 520. The second insulation layer 440 is stacked between the gate insulation layer 420 and the substrate 410, and the first insulation layer 430 is formed on the gate line 110 and the gate insulation layer 420. The data line 210 and the source electrode 220 are both formed on the first insulation layer 430, and the first interlayer dielectric layer 510 is formed on the data line 210, the source electrode 220 and the first insulation layer 430. The pixel electrode (not shown) is formed on the first interlayer dielectric layer 510, and the second interlayer dielectric layer 520 is formed on the pixel electrode. The source electrode 220 is electrically connected to one electrical connection portion 320 of the active layer 300 through a via penetrating through the gate insulation layer 420 and the first insulation layer 430, and the pixel electrode is electrically connected to the other electrical connection portion 320 of the active layer 300 through a via penetrating through the gate insulation layer 420, the first insulation layer 430 and the first interlayer dielectric layer 510 (the reference symbol "×" in a top view indicates a via).

As an optional embodiment of the present disclosure, the material of each transparent electrode strip 120 may be indium tin oxide (ITO). In the present embodiment, since a resistance of each transparent electrode strip 120 made of ITO is too large, if the transparent electrode strip 120 serves as a gate line alone under the specification of 2,000 PPI or more, the resistance of the transparent electrode strip 120 may reach 1,700 kΩ, which may cause a delay of a gate signal (which may also be referred to as "gate delay") to be too high, and a gate voltage at a far end to be unable to output. Thus, it is still necessary to retain the gate line 110 made of a metal material to implement the signal transmission function, and a width of the gate line 110 may be reduced to 0.9 µm (a resistance thereof being 35 kΩ still meets the requirement of the output of the gate voltage at the far end). Since the gate line 110 does not need to define a channel, after the width of the gate line 110 is reduced to 0.9 µm, it can still be ensured that the gate line 110 is covered by the black matrix under an assembly deviation of 1.5 µm, without affecting the aperture ratio, thus achieving maximum aperture ratio.

As an optional embodiment of the present disclosure, a material of the channel portion 310 includes any one of metal oxide, polysilicon, or low temperature polysilicon.

As an optional embodiment of the present disclosure, the material of the channel portion 310 includes any one or more of indium gallium zinc oxide (IGZO), indium gallium oxide (IGO), indium gallium zinc tin oxide (IGZTO), indium zinc oxide (IZO), and lanthanide doped metal oxide (In-OS).

As an optional embodiment of the present disclosure, each electrical connection portion 320 of the active layer 300 is obtained by doping and conductorizing an active layer material (which may include any one or more of indium gallium zinc oxide, indium gallium oxide, indium gallium zinc tin oxide, indium zinc oxide, and lanthanide doped metal oxide).

To ensure the stability of the performance of a thin film transistor, as a preferred embodiment of the present disclosure, the gate line 110 is located between the substrate 410 and both the transparent electrode strip 120 and the active layer 300. Specifically, as shown in FIGS. 11 to 12, the display substrate further includes a gate insulation layer 420 and a first insulation layer 430, and the gate insulation layer 420 is located between the gate line 110 and the active layer 300. The transparent electrode strip 120 is located on a side of the first insulation layer 430 distal to the substrate 410, and the gate line 110 is electrically connected to the transparent electrode strip 120 through a connection via 130 penetrating through the first insulation layer 430 and the gate insulation layer 420.

In an embodiment of the present disclosure, a position of the gate line 110 made of a metal is advanced to be on a lower side of the active layer 300, and a position of the transparent electrode strip 120 is unchanged, thereby forming a dual-gate structure. As such, the gate line 110 made of a metal can play a role of light shielding below the active layer 300, thereby effectively reducing the risk of characteristic drift of the thin film transistor caused by light illumination on the channel portion 310 of the active layer 300. Further, under the condition that a width of the transparent electrode strip 120 is 3 µm, a width of the gate line 110 under the transparent electrode strip 120 can still be kept at 0.9 µm, without affecting the aperture ratio, and at the same time, the gate line 110 shields the channel from light illumination, thereby protecting the channel while maintaining the switching function of the channel, and ensuring the stability of the performance of the thin film transistor.

As an optional embodiment of the present disclosure, as shown in FIGS. 12 and 13, the display substrate further includes a first insulation layer 430, a second insulation layer 440, a third insulation layer 450, a first interlayer dielectric layer 510, and a second interlayer dielectric layer 520. The second insulation layer 440 is stacked between the gate insulation layer 420 and the substrate 410, and the first insulation layer 430 is formed on the active layer 300 and the gate insulation layer 420. The transparent electrode strip 120 is formed on the first insulation layer 430, and the third insulation layer 450 is formed on the first insulation layer 430 and the transparent electrode strip 120. The data lines 210 and the source electrode 220 are formed on the third insulation layer 450, and the first interlayer dielectric layer 510 is formed on the data lines 210, the source electrode 220 and the third insulation layer 450. A pixel electrode (not shown) is formed on the first interlayer dielectric layer 510, and the second interlayer dielectric layer 520 is formed on the pixel electrode. The source electrode 220 is electrically connected to one of the electrical connection portions 320 of the active layer 300 through a via penetrating through the first insulation layer 430 and the third insulation layer 450, and the pixel electrode is electrically connected to the other of the electrical connection portions 320 of the active layer 300 through a via penetrating the first insulation layer 430, the third insulation layer 450, and the first interlayer dielectric layer 510 (the reference symbol "×" in a top view indicates a via).

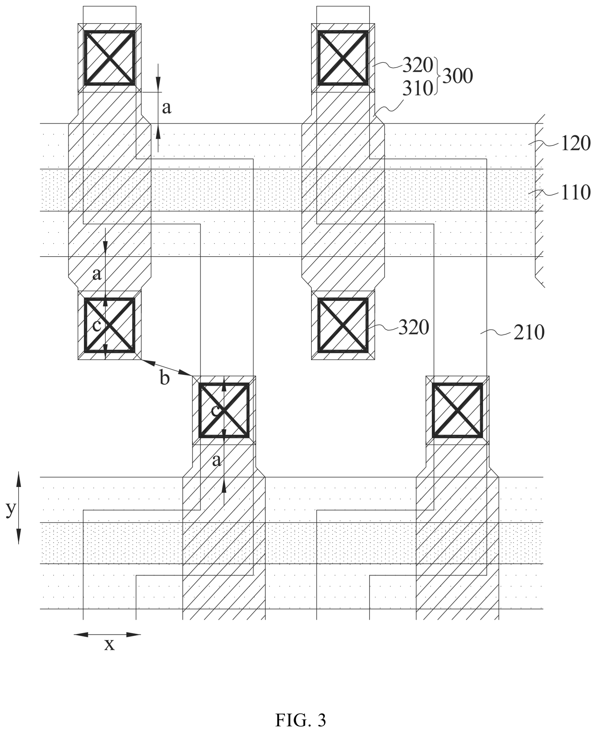

As an optional embodiment of the present disclosure, as shown in FIG. 3, one of the electrical connection portions 320 is connected to the pixel electrode through a first via (i.e., a drain via), and the other of the electrical connection portions 320 is electrically connected to the data line 210 through a second via (i.e., a source via). An orthogonal projection of the first via on the substrate 410 falls within an orthogonal projection of a corresponding pixel unit on the substrate 410.

As an optional embodiment of the present disclosure, as shown in FIGS. 1 and 11, a width m1 of the first via is about 1.5 µm, a width of a gap between the first via and the transparent electrode strip 120 (i.e. a minimum distance between the first via and the transparent electrode strip 120 on a film layer plane where the transparent electrode strip 120 is located) is about 0.65 µm. For example, the width m1 of the first via may be 1.3 µm to 1.7 µm, and the width of the gap between the first via and the transparent electrode strip 120 may be 0.4 µm to 0.75 µm.

A width m1 of the second via is about 1.5 µm, and a width of a gap between the second via and the transparent electrode strip 120 is about 0.65 µm. For example, the width m1 of the second via may be 1.3 µm to 1.7 µm, and the width of the gap between the second via and the transparent electrode strip 120 may be 0.4 µm to 0.75 µm.

As an optional embodiment of the present disclosure, an extension direction of the channel portion 310 of the active layer 300 forms a first preset angle with the second direction, and a range of the first preset angle is 30° to 90°.

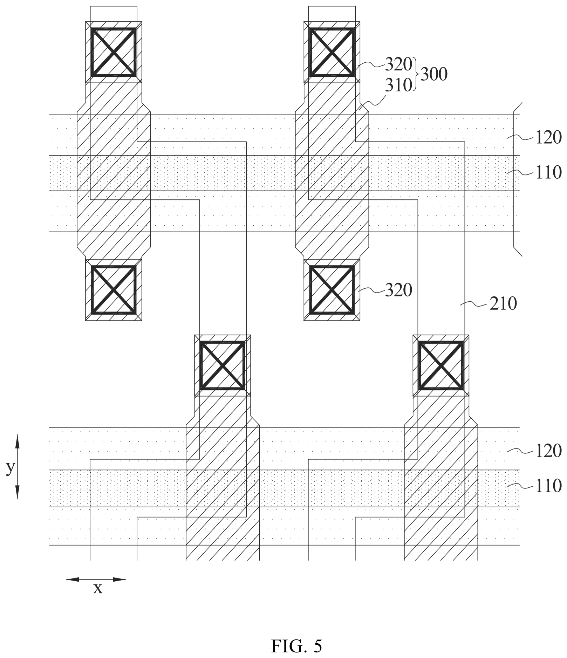

As an optional embodiment of the present disclosure, a central axis of the channel portion 310 of the active layer 300 and a central axis of each electrical connection portion 320 of the active layer 300 coincide with each other, as shown in FIG. 5.

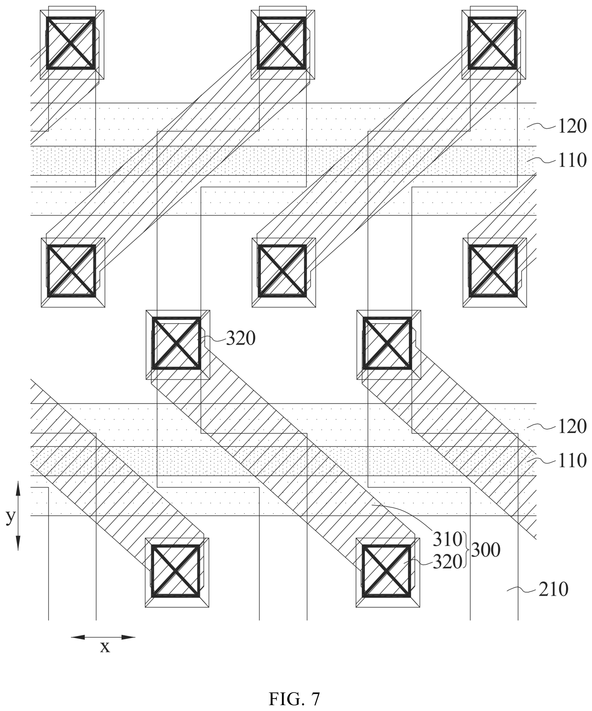

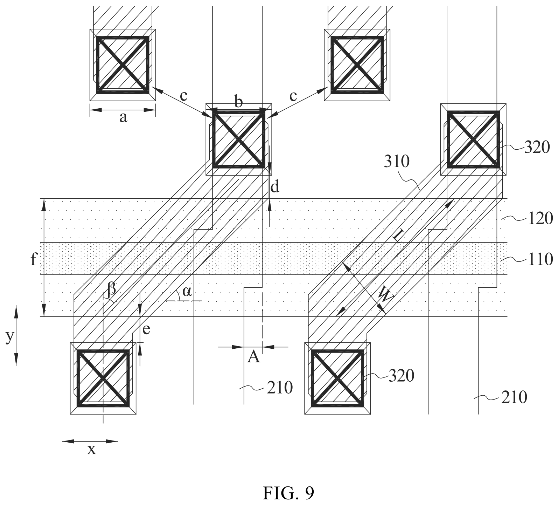

As another optional embodiment of the present disclosure, the central axis of the channel portion 310 of the active layer 300 and the central axis of each electrical connection portion 320 of the active layer 300 do not coincide with each other, as shown in FIG. 7 or 9. Optionally, as shown in FIG. 9, an angle β between the central axis of the channel portion 310 and the central axis of each electrical connection portion 320 may range from 30° to 90°.

As an optional embodiment of the present disclosure, the width of each transparent electrode strip 120 is equal to or less than 3 µm under the condition of 2,000 PPI or more. Specifically, as shown in FIG. 3, *a* is a distance from the first via or the second via to the channel, it is required to ensure that the vias do not cause short circuit to the channel, a process deviation for *a* is 0.65 µm; c is a size of each via, and has a current process limit of 1.5 µm; b is a same-layer distance (of space) between any two adjacent active layers 300, it is required to ensure that any two adjacent active layers 300 can be exposed and etched separately, and b has a minimum value of 2 µm. Based on the above dimensions and a feature size of each pixel unit of 6 µm × 8 µm, an auxiliary channel can have a size of 3 µm at a maximum; if this size is greater than 3 µm, the values of *a, b,* and c cannot be ensured, and the problem arises that the active layers 300 cannot be etched separately or the vias affect the channel. Therefore, the width of each transparent electrode strip 120 needs to be less than or equal to 3 µm.

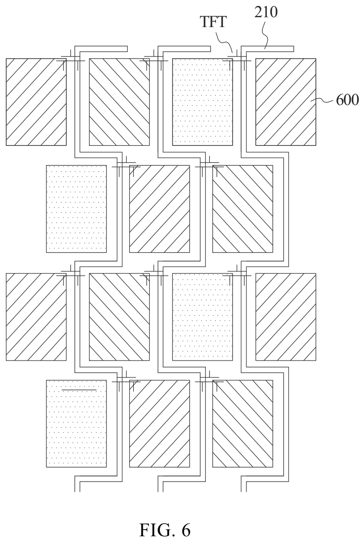

To further improve the display effect, as a preferred embodiment of the present disclosure, as shown in FIGS. 6, 7, and 9, an extension direction of the channel portion 310 of each active layer 300 forms a second preset angle α with the first direction, and two adjacent active layers 300 connected to a same data line 210 are respectively located on two opposite sides of the data line 210 such that a plurality of pixel units connected to each data line 210 are distributed on two sides of the corresponding data line 210 alternately.

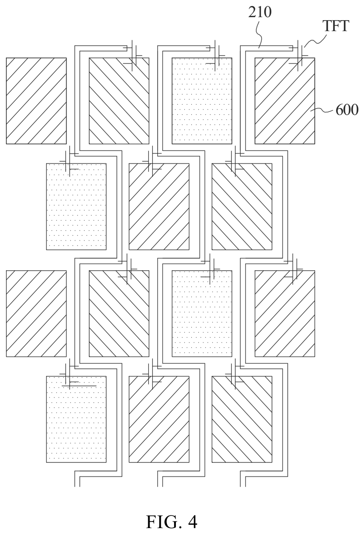

Currently, inversion methods for an LCD substrate include a column inversion and a Zig-Zag inversion, and FIGS. 4 and 5 show a structure of a column inversion under a delta arrangement. Pixels connected to each data line 210 in upper and lower rows are of different colors, which may cause a risk of cross-color. In addition, this connection method adopts a vertical TFT design, i.e., the extension direction of the channel portion 310 is parallel to the second direction, and the length L of the channel region is at most 3 µm, which is the maximum width of the transparent electrode strip 120.

In contrast, in an embodiment of the present disclosure, the channel portion 310 of each active layer 300 extends obliquely, and oblique directions of the active layers 300 in any two adjacent rows connected to a same data line 210 are opposite to each other, such that the Zig-Zag inversion mode shown in FIGS. 6 and 7 is implemented, while each channel portion 310 and each transparent electrode strip 120 intersect obliquely. As such, the length L of each channel region can be further increased under the condition that the width of each transparent electrode strip 120 is limited, thereby enabling the length L of each channel region to be greater than 3 µm, and improving the display effect.

As an optional embodiment of the present disclosure, the second preset angle α is 30° to 60°.

As an optional embodiment of the present disclosure, the display substrate further includes a color filter layer, which includes a plurality of color filter blocks in one-to-one correspondence with positions of a plurality of pixel units. Colors of a plurality of color filter blocks corresponding to a plurality of pixel units connected to each data line 210 are identical to each other (i.e., are the same), and a color of the color filter blocks corresponding to the pixel units connected to one of any two adjacent data lines 210 is different from a color of the color filter blocks corresponding to the pixel units connected to the other of any two adjacent data lines 210.

As shown in FIG. 9, *a* is a size of the first via, *b* is a size of the second via, c is a same-layer distance (or space) between any two adjacent active layers 300, *d* is a distance from a via to a channel and meets the requirement of a process variation, e is identical to *d, f* is a width of each transparent electrode strip 120, and W/L is a width-to-length ratio of a thin film transistor. Under the condition that a horizontal size of each pixel unit is 6 µm, the maximum misalignment distance A between the pixel units of any two adjacent rows is 3 µm. FIG. 10 lists the variations of the above parameters during the process of changing the misalignment distance A from 0 µm to 3 µm. As can be seen from the table, a length L of an oblique channel increases with the increase of the misalignment distance, and the minimum channel length L is also greater than 3.5 µm. As such, the oblique channel design according to an embodiment of the present disclosure can effectively ensure the characteristics of an oxide thin film transistor (Oxide TFT), thereby improving the display effect.

As an optional embodiment of the present disclosure, as shown in FIG. 12, a position of an orthogonal projection of the connection via 130 on the substrate 410 is located between orthogonal projections of two adjacent channel portions 310 on the substrate 410.

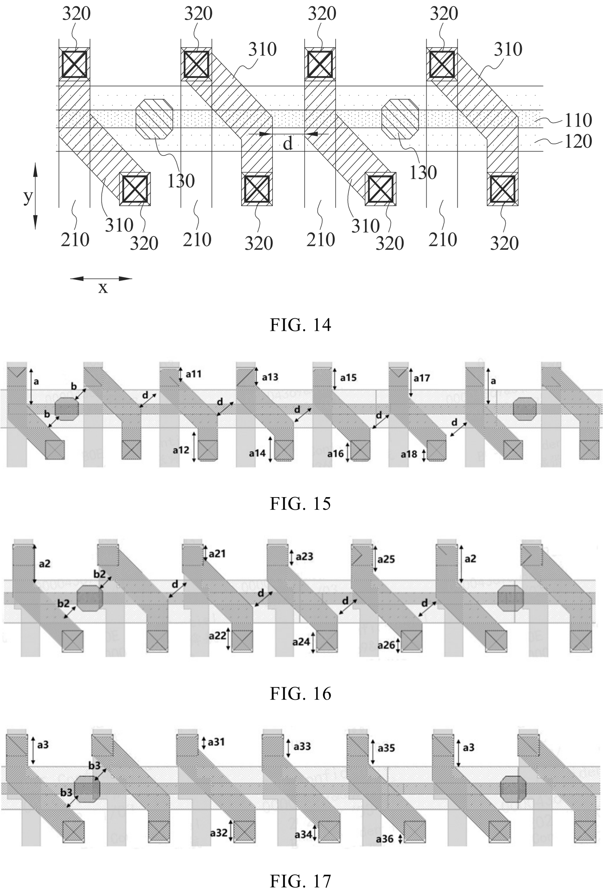

In a case where the display substrate further includes the substrate 410, the gate insulation layer 420 and the first insulation layer 430, where the gate line 110 is formed on the substrate 410, where the gate insulation layer 420 is formed on the gate line 110, where the active layer 300 is formed on the gate insulation layer 420, where the first insulation layer 430 is formed on the gate insulation layer 420 and the active layer 300, where the transparent electrode strip 120 is formed on the first insulation layer 430, and where the gate line 110 is electrically connected to the transparent electrode strip 120 through the connection via 130 penetrating through the first insulation layer 430 and the gate insulation layer 420 (i.e., where the position of the gate line 110 is advanced to be under the active layer 300 to form a dual-gate structure), to reserve a sufficient space for disposing a via, as a preferred embodiment of the present disclosure, as shown in FIGS. 12 and 14, at least one of the two electrical connection portions 320 extends in the second direction, and in the adjacent active layers 300 respectively located on both sides of the connection via 130, only a portion of the channel portion 310 corresponding to an end of the channel portion 310 distal to the connection via 130 extends along the second direction.

In an embodiment of the present disclosure, the adjacent active layers 300 respectively located on both sides of the connection via 130 are designed to be centrosymmetric, and in the adjacent active layers 300 respectively located on both sides of the connection via 130, only the portion of the channel portion 310 distal to the connection via 130 extends along the second direction, such that the two obliquely extending channel portions 310 are as far as possible from the connection via 130 therebetween, thereby providing a sufficient design space for the connection via 130.

As an optional embodiment of the present disclosure, as shown in FIG. 12, a length *a* of each electrical connection portion 320 in the second direction is about 3.03 µm, and the second preset angle α = 45°.

In an optional embodiment of the present disclosure, as shown in FIG. 12, a width *c* of an orthogonal projection of the connection via 130 on the substrate 410 is 1.5 µm to 2.5 µm. Optionally, the width c of the orthogonal projection of the connection via 130 on the substrate 410 is 2 µm.

As an optional embodiment of the present disclosure, as shown in FIG. 12, a distance b between the connection via 130 and an adjacent channel portion 310 (i.e., a distance between the connection via 130 and a channel) is equal to or greater than 1.2 µm. Optionally, the distance b between the connection via 130 and the adjacent channel portion 310 is 2 µm.

At present, after the active layers 300 are designed to be symmetrical and oblique, if each connection via 130 is disposed by taking every two adjacent pixel units on the left and right as a unit, as shown in FIG. 14, a distance d between the active layers 300 of two units on the left and right needs to be reduced to 1.5 µm, whereas the limit of the same-layer distance (or space) between the active layers 300 at present is 2 µm. Thus, more than two pixel units need to be disposed between any two adjacent connection vias 130, and the channels of the pixel units need to be designed in a gradually changing irregular shape. Specifically, as shown in FIGS. 15 to 19, in a plurality of active layers 300 on both sides of each of the connection vias 130, a length of the portion of each channel portion 310, which corresponds to the end of the channel portion 310 distal to the connection via 130, extending in the second direction, is gradually reduced along a direction away from the connection via 130, so as to ensure that the distance d between every two adjacent active layers 300 is not less than 2 µm.

As shown in FIG. 15, in the case where the misalignment distance A between the pixel units in two adjacent rows is A = 0 µm, a design that 6 pixel units form a cycle is adopted, and a channel structure of a 7-th pixel unit is the same as that of a 1-st pixel unit, such that a connection via 130 may be arranged between the 7-th pixel and an 8-th pixel, thereby realizing one cycle.

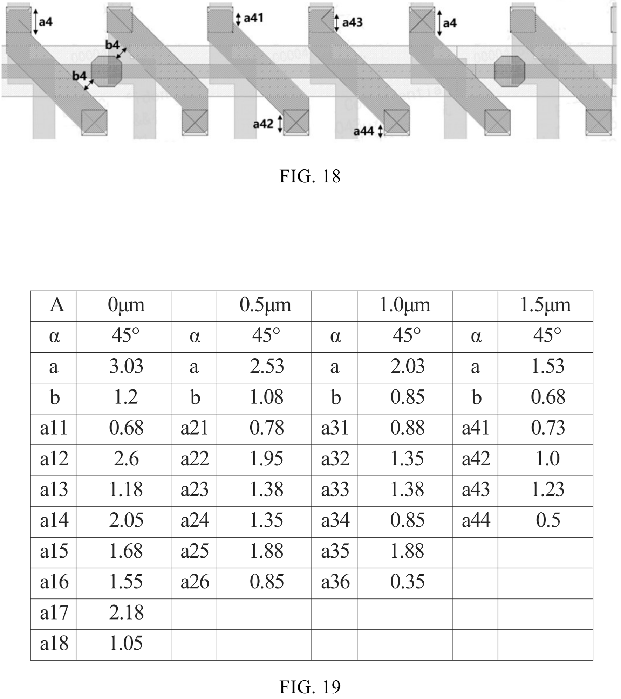

FIGS. 16 to 18 show the structure designs of the active layers 300 in the cases where the misalignment distances A between the pixel units in two adjacent rows are 0.5 µm, 1.0 µm, and 1.5, respectively, in which a design that 5 pixel units form a cycle (or period) is adopted for the misalignment distances A being 0.5 µm and 1.0 µm, and a design that 4 pixel units form a cycle (or period) is adopted for the misalignment distance A being 1.5 µm. The values marked in FIGS. 15 to 18 are about the values shown in the table of FIG. 19.

At present, in a case where the misalignment distance A between the pixel units in two adjacent rows exceeds 1.5 µm, if the position of the gate line 110 is advanced to be under the active layer 300 to form a double-gate structure, because a distance between the active layers 300 on the left and the right is too small, such that the distance b between the connection via 130 and a channel is b<0.65µm, the design requirement that b>0.65 cannot be met even if the active layers 300 on the left side and the right side of the connection via 130 are designed in an irregular shape. Thus, at present, the double-gate structure according to an embodiment of the present disclosure is only suitable for the case where the misalignment distance A between the pixel units in two adjacent rows is less than or equal to 1.5 µm.

As a second aspect of the present disclosure, there is provided a display panel including the display substrate according to any one of the foregoing embodiments of the present disclosure.

In the display panel according to an embodiment of the present disclosure, the display substrate includes the gate lines 110 and the data lines 210, the gate lines 110 intersecting the data lines 210. The data lines 210 are connected to corresponding pixel electrodes through the active layers 300 of the pixel units, and the channel portion 310 is provided at the position where the central portion of each active layer 300 intersects a corresponding gate line 110. Each channel portion 310 can change its electrical properties with a change in a signal on the gate line 110, so as to selectively electrically connect each pixel electrode with a corresponding data line 210, thereby realizing the control of the light emission of each pixel unit. In addition, the orthogonal projection of each channel portion 310 on the substrate 410 overlaps with the orthogonal projection of a corresponding data line 210 on the substrate 410, such that the channel portion 310 can be shielded by both a portion of the black matrix corresponding to the gate line 110 and a portion of the black matrix corresponding to the data line 210, thereby improving the aperture ratio of each pixel unit, reducing the display power consumption of the display substrate, and improving the display effect of the display substrate.

It should be understood that the foregoing embodiments are merely exemplary embodiments adopted to illustrate the principles of the present disclosure, and the present disclosure is not limited thereto. It would be apparent to one of ordinary skill in the art that various modifications and improvements may be made therein without departing from the spirit and scope of the present disclosure, and such modifications and improvements are also considered to be within the scope of the present disclosure.

## Claims

1. A display substrate, comprising a substrate, a plurality of gate lines extending along a first direction, and a plurality of data lines extending along a second direction, both the plurality of gate lines and the plurality of data lines being arranged on a side of the substrate, wherein the plurality of gate lines are arranged in a layer different from a layer where the plurality of data lines are arranged, orthogonal projections of the plurality of gate lines on the substrate intersect orthogonal projections of the plurality of data lines on the substrate to define a plurality of pixel units, each of the plurality of pixel units comprises at least one transistor, the transistor comprises an active layer, the active layer comprises a channel portion and a pair of electrical connection portions connected to both sides of the channel portion, and an orthogonal projection of the channel portion on the substrate overlaps with an orthogonal projection of a corresponding data line on the substrate.

2. The display substrate according to claim 1, further comprising a plurality of transparent electrode strips extending along the first direction, wherein positions of the plurality of transparent electrode strips are in one-to-one correspondence with positions of the plurality of gate lines, and orthogonal projections of the plurality of transparent electrode strips on the substrate cover respective orthogonal projections of the plurality of gate lines on the substrate.

3. The display substrate according to claim 2, wherein each pixel unit comprises a pixel electrode, one of the electrical connection portions is electrically connected to the corresponding data line, the other of the electrical connection portions is electrically connected to the pixel electrode, and the channel portion is configured to change an electrical conduction state of the channel portion in response to a change in a potential of a corresponding gate line and a corresponding transparent electrode strip to selectively electrically connect the corresponding data line with the pixel electrode.

4. The display substrate according to claim 2, wherein in a direction parallel to a plane where the substrate is located and perpendicular to the first direction, a width of each transparent electrode strip is d1, and a width of each gate line is d2, where 1≤|d1/d2|≤4.

5. The display substrate according to claim 4, wherein each transparent electrode strip is electrically connected to a corresponding gate line, and the transparent electrode strip and the corresponding gate line are located on one side of the active layer relative to the substrate or respectively on both sides of the active layer relative to the substrate.

6. The display substrate according to claim 5, further comprising a gate insulation layer located on a side of the active layer distal to the substrate, wherein the corresponding transparent electrode strip and the corresponding gate line are sequentially located on a side of the gate insulation layer distal to the substrate.

7. The display substrate according to claim 5, further comprising a gate insulation layer and a first insulation layer, wherein the gate insulation layer is located between the corresponding gate line and the active layer, the first insulation layer is located on a side of the gate insulation layer distal to the substrate, the corresponding transparent electrode strip is located on a side of the first insulation layer distal to the substrate, and the corresponding gate line and the corresponding transparent electrode strip are electrically connected together through a connection via penetrating through the first insulation layer and the gate insulation layer.

8. The display substrate according to claim 7, wherein a position of an orthogonal projection of the connection via on the substrate is located between orthogonal projections of two adjacent channel portions on the substrate.

9. The display substrate according to claim 8, wherein a width of the orthogonal projection of the connection via on the substrate ranges from 1.5 µm to 2.5 µm.

10. The display substrate according to claim 8, wherein a distance between the connection via and a channel portion adjacent to the connection via is greater than or equal to 1.2 µm.

11. The display substrate according to claim 8, wherein in active layers on both sides of the connection via, a length of a portion of each channel portion, which corresponds to an end of the channel portion distal to the connection via, extending in the second direction, is gradually reduced along a direction away from the connection via.

12. The display substrate according to claim 3, wherein the one of the electrical connection portions is electrically connected to the corresponding data line through a second via, the other of the electrical connection portions is electrically connected to the pixel electrode through a first via, and an orthogonal projection of the first via on the substrate falls within an orthogonal projection of a corresponding pixel unit on the substrate.

13. The display substrate according to claim 12, wherein a width of a gap between the first via and a corresponding transparent electrode strip ranges from 0.4 µm to 0.75 µm.

14. The display substrate according to claim 12, wherein a width of a gap between the second via and a corresponding transparent electrode strip ranges from 0.4 µm to 0.75 µm.

15. The display substrate according to any one of claims 1 to 3, wherein an extension direction of the channel portion of each active layer forms a first preset angle with the second direction, and the first preset angle ranges from 30° to 90°.

16. The display substrate according to any one of claims 1 to 3, wherein a central axis of the channel portion of each active layer and a central axis of each electrical connection portion of the active layer coincide with each other.

17. The display substrate according to any one of claims 1 to 3, wherein a central axis of the channel portion of each active layer and a central axis of each electrical connection portion of the active layer do not coincide with each other, and form an angle ranging from 30° to 90° therebetween.

18. The display substrate according to any one of claims 1 to 3, wherein an extension direction of the channel portion forms a second preset angle with the first direction, any two adjacent active layers connected to a same data line are respectively located on two opposite sides of the data line, and the pixel units connected to each data line are distributed on both sides of the data line alternately.

19. The display substrate according to any one of claims 1 to 3, wherein a ratio of a size of each pixel unit in the first direction to a size of the pixel unit in the second direction ranges from 3/4 to 4/3.

20. The display substrate according to any one of claims 1 to 3, wherein a material of the channel portion comprises any one of metal oxide, polysilicon, or low temperature polysilicon.

21. A display panel, comprising the display substrate according to any one of claims 1 to 20.
